(19) 

Europäisches Patentamt

European Patent Office

Office européen des brevets

(11) **EP 4 763 823 A1**

(12) **EUROPEAN PATENT APPLICATION**

(43) Date of publication:
24.06.2026   Bulletin 2026/26

(21) Application number: 24222229.7

(22) Date of filing: **20.12.2024**

(51) International Patent Classification (IPC):
*C04B 28/02* (2006.01)

(52) Cooperative Patent Classification (CPC):
(C-Sets available)
**C04B 40/0021; C04B 28/02; C04B 40/005;
C04B 40/0082** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Sonocrete GmbH
03050 Cottbus (DE)

(72) Inventors:
• **Remus, Ricardo**
  03050 Cottbus (DE)
• **Linz, German**
  03222 Lübbenau (DE)
• **Jentzsch, Max**
  03050 Cottbus (DE)

(74) Representative: **Fuchs Patentanwälte
Partnerschaft mbB
Tower 185
Friedrich-Ebert-Anlage 35-37
60327 Frankfurt am Main (DE)**

(54) **METHOD OF MAKING A CONCRETE OR MORTAR MIXTURE AND OF MAKING A STRUCTURAL COMPONENT**

(57)    The present invention relates to a method of making a concrete or mortar mixture and a method of making a structural component. The methods comprise the preparation of a slurry of cement and water which is activated in a first vessel before being mixed with further components to obtain the concrete or mortar mixture.

**FIG. 3**

**(Cont. next page)**

EP 4 763 823 A1

(52) Cooperative Patent Classification (CPC): (Cont.)

C-Sets
**C04B 28/02, C04B 14/06, C04B 14/42,**
**C04B 14/48, C04B 16/06, C04B 22/00863,**
**C04B 24/26, C04B 2103/54, C04B 2103/0088;**
**C04B 40/0021, C04B 28/02, C04B 40/0028;**
**C04B 40/005, C04B 28/02, C04B 40/0028;**
**C04B 40/0082, C04B 28/02, C04B 40/0028**

**Description**

The present invention relates to a method of making a concrete or mortar mixture and a method of making a structural component, as well as to a slurry and a structural component, and a device suitable for carrying out the method. The methods comprise the preparation of a slurry of cement and water which is activated in a first vessel before being mixed with further components to obtain the concrete or mortar mixture.

Background of the Disclosure

Precast concrete elements are very important in the construction industry due to their weather-independent production. The precast elements can be produced in high quality all year round. However, the production of concrete with current techniques involves a large input of materials and energy. To ensure an efficient precast production process, the concrete must have rapid strength development to minimize the turnaround time of precast production. Rapid strength development is typically provided with highly reactive Portland cements and heat treatment of the concretes. However, highly reactive Portland cements are very expensive and have a significant carbon footprint. Additional heat treatment of concretes can be implemented using superheated steam or thermal oil directly in the formwork or in heat chambers with hot air. This consumes considerable amounts of fuels, which in turn cause high $CO_2$ emissions. In addition, around one third of the heat produced is used to heat the steel formwork, and this proportion is therefore not available to accelerate the chemical reaction.

Furthermore, heat treatment cannot be increased arbitrarily, since too high treatment temperatures of the concrete can lead to structural damage and to considerable losses in the durability of the concrete. The use of chemical accelerators allows an increase in compressive strength. However, chemical accelerators may interact negatively with other concrete constituents and may not be economical as a substitute for heat treatment. Moreover, the compressive strength achieved by chemical accelerators may not be sufficient at low temperatures to maintain a fast and efficient process.

Moreover, methods of the prior art have proven insufficient in terms of economical performance, carbon reduction and product homogeneity.

It is an object of the present invention to provide an improved method of making a concrete or mortar mixture. In particular, the overall carbon footprint of the production of structural components shall be low while allowing for an economic production. It is a further object to produce structural components which have a uniformly high quality.

Brief Summary of the Disclosure

In a first aspect, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

  wherein a cement mass ratio of cement in the slurry to cement in the bulk components is from 0.01 to 0.75, and

  wherein an activation time of the slurry is at least 0.1 hours, and wherein the activation time in hours is from 2.0 to 400 times the cement mass ratio.

The method of this disclosure provides for an economic improvement of the process of making a concrete or mortar mixture. It was found that by choosing an activation time relative to the cement mass ratio as stipulated herein, a more homogeneous and thoroughly activated slurry can be obtained to improve the overall concrete or mortar production process.

In a second aspect, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

  wherein a cement mass ratio of cement in the slurry to cement in the bulk components is from 0.01 to 0.75, and

  wherein a ratio of a volume of the first vessel relative to the cement mass ratio is at least 3.0 [m$^3$].

A minimum volume of the first vessel, where activation takes place, relative to the cement mass ratio helps achieve a more homogeneous product as a higher amount of slurry can be produced in one step without the need of combining various slurry portions with varying degrees of activation.

In a third aspect, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

  wherein a cement mass ratio of cement in the slurry to cement in the bulk components is from 0.01 to 0.75, and

  wherein a ratio of a volume of the activated slurry in the first vessel to the cement mass ratio is at least 2.5 [m$^3$].

It was found that using larger volumes of activated slurry in the first vessel helps homogeneity and economic outcomes of the method. Contrary to the teachings of the prior art that advocate short activation times in small volumes, it was found that using high slurry volumes allows for a more reliable and balanced results.

In a fourth aspect, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

  wherein a cement mass ratio of cement in the slurry to cement in the bulk components is from 0.01 to 0.75, and

  wherein a ratio of a daily production output of the process to a volume of the activated slurry is at most 200 [d$^{-1}$].

The inventors found that a volume of the activated slurry above a certain threshold relative to the daily production output of the process helps achieve the desired results, including high volumes of concrete with activated slurry, homogeneous products, reliable activation status in the product, and improved process economy. Using a larger volume of activated slurry and thus a larger volume vessel may at first glance seem counterintuitive as it increases construction costs. However, using the processes as disclosed herein, overall costs are reduced by allowing for a more efficient process as will be described in more detail herein below.

In a fifth aspect, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

  wherein a cement mass ratio of cement in the slurry to cement in the bulk components is from 0.01 to 0.75, and

wherein the activated slurry, when preparing the mixture with the bulk components, has a V-funnel flow time of 5 to 60 seconds as determined according to DIN EN 445:2008-01 at 25 °C and 1013 hPa with a 1 liter Marsh funnel.

It was found that a slurry having the property described above is excellently suitable for mixing with the bulk components to prepare superior products, including reliable properties in the downstream process. In addition, the viscosity as indicated with reference to the funnel flow time allows for good mixing properties and safeguards good stability during interim storage in an optional second vessel before mixing with the bulk components.

In a sixth aspect, the disclosure relates to a slurry for a concrete or mortar mixture, comprising an amount of cement and an amount of water wherein, particularly when activated, the slurry has a degree of hydration of from 1.0 to 10%.

This improved slurry is accessible via the processes described herein. Using large volumes of slurry in the first vessel allows for preparation of large volumes of activated slurry with a homogeneous state of activation as indicated with reference to C-S-H phase lengths. This is contrary to prior art methods that focused on batchwise activation of smaller batches of slurry in an intense activation step in a small vessel.

In a seventh aspect, the disclosure relates to a method of making a structural component comprising,

- performing the method of making a concrete or mortar mixture according to one or more of the first to fifth aspect, and

- solidifying the concrete or mortar mixture in the shape of the structural component.

This aspect relates to the application of the concrete or mortar mixture, wherein the mixture has superior properties in terms of homogeneous, i.e. plannable, solidification times. This provides for a more efficient process cycle and thus improved use of available resources, including molds and transportation capabilities.

In an eighth aspect, the disclosure relates to a structural component obtainable or obtained according to the method of the seventh aspect.

In a ninth aspect, this disclosure relates to a device for making a concrete or mortar mixture comprising

- a first vessel comprising an activation device for activating a slurry consisting of an amount of cement and an amount of water, optionally further comprising a stirrer;

- an optional second vessel for storing activated slurry, optionally comprising a stirrer; and

- a mixing compartment or vessel for mixing (a) at least a portion of the activated slurry and (b) bulk components, wherein the bulk components comprise at least water and cement,

wherein, optionally, the device is configured to perform the methods according to one or more of the first to fifth aspects.

In comparison to the prior art, these aspects provide for manifold improvements. For example, in view of the required amount of activated cement suspension for the production process in conventional processes, the applicable batch times were rather short. Consequently, conventional devices required high power and several ultrasonic probes to be able to achieve the necessary power input in the short available time. Hence, the legacy process had a considerable carbon footprint and device costs. Furthermore, some processes employed additional crystallization tanks where several batches of activated cement suspension were continuously collected, the batches having different states of crystallization which made it difficult to determine the required crystallization time accurately. In addition to this, similar to the solera process for aging liquids such as wine, beer, vinegar, and brandy, the mixture within the crystallization tank would contain fractions of very old activated cement suspension which resulted in inhomogeneities in the properties of the produced concrete and parts produced therewith. Finally, the available short activation times can be too short for some types of slow reacting cements which consequently could not be used in that process.

Brief Description of the Drawings

Figure 1 is a flowchart of a method of making a concrete or mortar mixture according to this disclosure.

Figure 2 is an SEM image showing a slurry after 24 hours of storage without activation, including aggregates.

Figure 3 is an SEM image with the same magnification as Figure 2 showing an activated slurry after 24 hours of storage following activation according to this disclosure.

Figure 4 is an SEM image at a magnification of 80,000 showing a slurry after 24 hours of storage without activation.

Figure 5 is an SEM image with the same magnification as Figure 4 showing an activated slurry after 24 hours of storage following activation according to this disclosure.

Detailed Description of the Disclosure

The details of this disclosure relate to the aspects described in the summary of this disclosure. Any of the features of the embodiments described hereinafter may relate to the method of making a concrete or mortar mixture, the method of making a structural component as well as the slurry for a concrete or mortar mixture.

**Definitions**

"Activating" the slurry comprising water and cement and/or secondary cementitious materials refers to a process which initiates the growth of strength determining hydrates, such as C-S-H phases. This activation comprises the application of energy to the slurry which may, for example, be achieved by heating, ultrasonic waves, or high intensity stirring/mixing. Using ultrasonic waves is particularly advantageous in view of the low carbon footprint. C-S-H (Calcium Silicate Hydrates) phases are nano-sized three-dimensional phases. They are nano-crystallized needle-like phases. When referring to their length, this refers to the largest dimension of the phase in any direction.

"Activation time" refers to the amount of time spent by the slurry in a vessel under application of energy input for activation. Any consecutive time span until mixing the slurry with the bulk components without continued application of the energy input, such as during an intermediate storage in a vessel, is not considered to be part of the activation time.

A "daily production output" as used herein refers to the maximum total volume of concrete or mortar mixture that can be produced during 24 hours in continuous operation at the given parameters, e.g. at a particular cement mass ratio. For example, if an 8-hour shift can produce 160 m$^3$ of concrete, the daily production output would be 480 m$^3$/d, if the factory operates in three shifts.

As used herein "secondary cementitious material" includes one or more of fly ash, ground granulated blastfurnace slag (GGBS), limestone, silica fume, natural pozzolana and natural calcined pozzolana.

The method of making a concrete or mortar mixture according to the present disclosure provides a more effective process by using optimized activation times.

The method of making a concrete or mortar mixture according to the present disclosure comprises mixing an amount of cement and an amount of water to obtain a slurry and activating the slurry in a first vessel. The mixing may be done in a separate vessel or mixing device or in the first vessel where the slurry will be activated. The activated slurry or a portion thereof is then mixed with bulk components. The bulk components comprise at least water and cement and may additionally comprise aggregates. The bulk components may be pre-mixed before mixing with the activated slurry. Alternatively, mixing can also be done in a single step together with the activated slurry.

In an embodiment, the mixture of activated slurry and bulk components, immediately after mixing, has a degree of hydration of >0%, such as >0.3%, >0.5% or >1.0%. As the activated slurry may have a considerable degree of hydration after activation, the degree of hydration imparted to the mixture is raised by mixing bulk components and slurry. Optionally, the degree of hydration of the mixture may be up to 5.0%, up to 4.0%, up to 3.0% or up to 2.0% immediately after mixing. For example, the degree of hydration of the mixture immediately after mixing may range from >0% to 5.0%, from >0.3% to 4.0%, from >0.5% to 3.0% or from >1.0% to 2.0%.

The cement mass ratio of cement in the slurry to cement in the bulk components may range from 0.01 to 0.75. The cement mass ratio may be at least 0.01, at least 0.05, at least 0.10 or at least 0.25. The cement mass ratio may be at most 0.75, at most 0.70, at most 0.65 or at most 0.60. The cement mass ratio may be from 0.01 to 0.75, from 0.05 to 0.70, from 0.10 to 0.65 or from 0.25 to 0.60. Generally, using more activated slurry, i.e. a higher cement mass ratio will result in a concrete or mortar mixture that solidifies quicker than a mixture with a lower cement mass ratio. Whereas extremely fast solidification is not always desired, a broad range of options concerning cement mass ratios is desirable. The methods disclosed herein provide for the option of very high cement mass ratios.

In an aspect, the activation time of the slurry is at least 0.1 hours. The activation time of the slurry may be from 0.1 to 50 h, from 0.25 to 30 h, from 0.5 to 25 h, from 0.75 to 10 h or from 0.5 to 5 h. The activation time of the slurry may be at least 0.1 h, at least 0.25 h, at least 0.5 h or at least 0.75 h. The activation time of the slurry may be at most 50 h, at most 30 h or at most 25 h or at most 10 h or at most 5 h.

In an aspect, the activation time in hours may be from 2.0 to 400 times the cement mass ratio, from 2.5 to 350 times the cement mass ratio, from 3.0 to 300 times the cement mass ratio or from 3.5 to 250 times the cement mass ratio. The activation time in hours may be at least 2.0 times the cement mass ratio, at least 2.5 times the cement mass ratio, at least 3.0 times the cement mass ratio or at least 3.5 times the cement mass ratio. The activation time in hours may be at most 400 times the cement mass ratio, at most 350 times the cement mass ratio, at most 300 times the cement mass ratio or at most 250 times the cement mass ratio. In some embodiments, the activation time of the slurry is at least 20 times, at least 40 or at least 60 times the cement mass ratio. Optionally, the activation time of the slurry is at most 200 times, at most 160 times or at most 100 times the cement mass ratio. Optional ranges of the activation time include from 20 to 200, from 40 to 160 or from 60 to 100 times the cement mass ratio.

The inventors have surprisingly found that an optimized activation time allows for a very homogeneous activation state of the slurry over a broad range of cement mass ratios. Applying the energy input for a longer time, optionally with decreased power, further provides the flexibility to use slower reacting cements and requires less differently aged batches of activated slurry to be mixed with the bulk components. Hence, the quality is greatly improved.

In embodiments, the method may further comprise storing the activated slurry in a second vessel, in particular before preparing the mixture. In this embodiment, a second vessel can be used to collect one or more batches of activated slurry, e.g. before the mixture is prepared. This can be useful for achieving a controlled further crystal growth and when using two or more first vessels. In some desirable embodiments, the activation is essentially finished when the slurry exits the first vessel. Optionally, the process may be controlled such that each second vessel comprises activated slurry of the same age, e.g. activated slurry at different stages of activation or different ages is not mixed. This way, larger amounts of concrete or mortar mixtures can be produced for the production of larger structural components or for increasing the throughput. A particular application of the second vessel in combination with two first vessels is a time shifted supply of activated slurry to the second vessel such that the filling level is suitable for producing a certain desired amount of concrete or mortar mixture per hour. It functions as a buffer container to ascertain constant supply.

In an embodiment, the method may include the following steps in consecutive order:

a) mixing an amount of cement and an amount of water to obtain a slurry,

b) activating the slurry in the first vessel,

c) transferring activated slurry from the first vessel to a second vessel and storing the activated slurry in the second vessel, optionally under light stirring and/or cooling to avoid further activation,

d) during storing of the activated slurry in the second vessel, activating a further portion of slurry in the first vessel,

e) discharging stored activated slurry from the second vessel, and

f) transferring the further activated slurry from the first vessel to the second vessel and storing the further activated slurry in the second vessel.

These steps may be repeated as necessary to satisfy the need for activated slurry as results from the cement mass ratio of the concrete or mortar mixture and the overall production volume. In another variation of the method of this disclosure, the method may include the following steps in consecutive order:

a) Mixing an amount of cement and an amount of water to obtain a slurry,

b) activating the slurry in the first vessel for an activation time $t_a$,

c) after a period of about $t_a/2$, activating a further portion of slurry in an additional first vessel for an activation time $t_b$, wherein optionally $t_a$ is about $t_b$.

d) after $t_a$, transferring activated slurry from the first vessel to a second vessel and storing the activated slurry in the second vessel,

e) during storing of the activated slurry in the second vessel, activating a further portion of slurry in the first vessel,

f) discharging the stored activated slurry from the second vessel, optionally after a storage period of up to $t_b/2$, and

g) transferring the further activated slurry from the additional first vessel to the second vessel and storing the further activated slurry in the second vessel.

In embodiments, the method may further comprise obtaining the concrete or mortar mixture, the concrete or mortar mixture comprising or consisting of the activated slurry and the bulk components.

In embodiments, the slurry may comprise from 10 to 50 % by mass of cement and from 40 to 90 % by mass of water. For example, the slurry may comprise at least 10 % by mass, at least 20 % by mass, or at least 30 % by mass of cement. In embodiments, the slurry may comprise up to 50% by mass, up to 45% by mass, or up to 40% by mass of cement. The proportion of cement in the slurry may range from 20% by mass to 45% by mass, or from 30% by mass to 40% by mass.

Optionally, the slurry may comprise up to 90 % by mass, up to 80 % by mass, up to 70 % by mass, up to 60 % by mass or up to 55 % by mass of water. The water content may be at least 40% by mass, at least 45% by mass or at least 50% by mass. In embodiments, the amount of water is from 45% to 80% by mass, or from 50% to 60% by mass.

Other optional components may be present in the slurry, for example secondary cementitious material, rock flour, pigments, glass fibers, steel fibers, polymer fibers, and/or polymers. The amount of optional components may range from 0% by mass to 50% by mass, from 5.0% by mass to 40% by mass, or from 10% by mass to 30% by mass.

In an embodiment, the slurry comprises (in wt.-%)

| cement | 5.0 to 50% |
|---|---|
| water | 40 to 90% |
| secondary cementitious material, rock flour, pigments glass fibers, steel fibers, polymer fibers, and/or polymers | 0 to 50% |

In another embodiment, the slurry comprises

| cement | 5.0 to 45% |
|---|---|
| water | 45 to 80% |
| secondary cementitious material, rock flour, pigments glass fibers, steel fibers, polymer fibers, and/or polymers | 5.0 to 40% |

In a further embodiment, the slurry comprises

| cement | 5.0 to 40% |
|---|---|
| water | 15 to 70% |
| secondary cementitious material, rock flour, pigments glass fibers, steel fibers, polymer fibers, and/or polymers | 10 to 80% |

In embodiments, the bulk components may comprise from 10 to 50 % by mass of cement, from 20 to 70 % by mass of water, and optionally from 50 to 85% by mass of secondary cementitious material, sand, gravel, rock, rock flour, grit, pigments, glass fibers, steel fibers, polymer fibers, and/or polymers. The bulk components may comprise at least 10 % by mass, at least 15 % by mass, at least 20 % by mass or at least 25 % by mass of cement. The bulk components may comprise at most 50 % by mass, at most 45 % by mass, at most 40 % by mass, at most 35 % by mass or at most 30 % by mass of cement. Optionally, the bulk components comprise cement in an amount of from 15 to 45% by mass, from 20 to 40% by mass or from 25 to 35% by mass.

The bulk components may comprise at least 20 % by mass, at least 25 % by mass, at least 30 % by mass, at least 35 % by mass or at least 40 % by mass. The bulk components may comprise at most 70 % by mass, at most 65 % by mass, at most 60 % by mass, at most 55 % by mass, at most 50 % by mass or at most 45 % by mass of water. Thus, the bulk components may comprise water in an amount of from 25 to 65% by mass, from 30 to 60% by mass, from 35 to 55% by mass or from 40 to 50% by mass.

The bulk components may comprise at least 50 % by mass, at least 55 % by mass or at least 60 % by mass, at least 65 % by mass or at least 70 % by mass of secondary cementitious material, sand, gravel, rock, rock flour, grit, pigments, glass fibers, steel fibers, polymer fibers, and/or polymers. The bulk components may comprise at most 85 % by mass, at most 82 % by mass, at most 80 % by mass, at most 78 % by mass or at most 75 % by mass of secondary cementitious material, sand, gravel, rock, rock flour, grit, pigments, glass fibers, steel fibers, polymer fibers, and/or polymers. Optionally, these components may be present in the bulk components in amounts of from 55 to 82% by mass, from 60 to 80% by mass, from 65 to 78% by mass or from 70 to 75% by mass.

Thus in an embodiment, the bulk components comprise the following constituents by mass:

| cement | 10 to 50% |
|---|---|

(continued)

| water | 3 to 30% |
|---|---|
| secondary cementitious material, sand, gravel, rock, rock flour, grit, pigments, glass fibers, steel fibers, polymer fibers, and/or polymers | 50 to 85% |

In another embodiment, the bulk components comprise the following constituents by mass:

| cement | 15 to 45% |
|---|---|
| water | 5 to 25% |
| secondary cementitious material, sand, gravel, rock, rock flour, grit, pigments, glass fibers, steel fibers, polymer fibers, and/or polymers | 50 to 82% |

In another embodiment, the bulk components comprise the following constituents by mass:

| cement | 20 to 40% |
|---|---|
| water | 10 to 30% |
| secondary cementitious material, sand, gravel, rock, rock flour, grit, pigments, glass fibers, steel fibers, polymer fibers, and/or polymers | 50 to 80% |

In an embodiment, the proportions of cement, water and the total of secondary cementitious material, sand, gravel, rock, rock flour, grit, pigments, glass fibers, steel fibers, polymer fibers, and/or polymers add up to at least 90%, at least 95%, at least 98% or at least 99% of the bulk components. In one embodiment, the bulk components consist of cement, water and secondary cementitious material, sand, gravel, rock, rock flour, grit, pigments, glass fibers, steel fibers, polymer fibers, and/or polymers.

In embodiments, the concrete or mortar mixture may comprise from 10 to 50 % by mass of cement, from 20 to 70 % by mass of water, and optionally from 50 to 85% by mass of secondary cementitious material, sand, gravel, rock, rock flour, grit, pigments, glass fibers, steel fibers, polymer fibers, and/or polymers. The concrete or mortar mixture may comprise at least 10 % by mass, at least 15 % by mass, at least 20 % by mass or at least 25 % by mass of cement. The concrete or mortar mixture may comprise at most 50 % by mass, at most 45 % by mass, at most 40 % by mass, at most 35 % by mass or at most 30 % by mass of cement. Optionally, the concrete or mortar mixture comprises cement in an amount of from 15 to 45% by mass, from 20 to 40% by mass or from 25 to 35% by mass.

The concrete or mortar mixture may comprise at least 20 % by mass, at least 25 % by mass, at least 30 % by mass, at least 35 % by mass or at least 40 % by mass. The concrete or mortar mixture may comprise at most 70 % by mass, at most 65 % by mass, at most 60 % by mass, at most 55 % by mass, at most 50 % by mass or at most 45 % by mass of water. Thus, concrete or mortar mixture may comprise water in an amount of from 25 to 65% by mass, from 30 to 60% by mass, from 35 to 55% by mass or from 40 to 50% by mass.

The concrete or mortar mixture may comprise at least 50 % by mass, at least 55 % by mass or at least 60 % by mass, at least 65 % by mass or at least 70 % by mass of secondary cementitious material, sand, gravel, rock, rock flour, grit, pigments, glass fibers, steel fibers, polymer fibers, and/or polymers. The concrete or mortar mixture may comprise at most 85 % by mass, at most 82 % by mass, at most 80 % by mass, at most 78 % by mass or at most 75 % by mass of secondary cementitious material, sand, gravel, rock, rock flour, grit, pigments, glass fibers, steel fibers, polymer fibers, and/or polymers. Optionally, these components may be present in the concrete or mortar mixture in amounts of from 55 to 82% by mass, from 60 to 80% by mass, from 65 to 78% by mass or from 70 to 75% by mass.

Thus in an embodiment, the concrete or mortar mixture comprises the following constituents by mass:

| cement | 10 to 50% |
|---|---|
| water | 5 to 20% |
| secondary cementitious material, sand, gravel, rock, rock flour, grit, pigments, glass fibers, steel fibers, polymer fibers, and/or polymers | 50 to 85% |

In another embodiment, the concrete or mortar mixture comprises the following constituents by mass:

| cement | 15 to 45% |
| --- | --- |
| water | 4 to 8% |
| secondary cementitious material, sand, gravel, rock flour, grit, pigments, glass fibers, steel fibers, polymer fibers, and/or polymers | 51 to 90% |

In another embodiment, the concrete or mortar mixture comprises the following constituents by mass:

| cement | 30 to 60% |
| --- | --- |
| water | 8 to 12% |
| secondary cementitious material, sand, gravel, rock flour, grit, pigments, glass fibers, steel fibers, polymer fibers, and/or polymers | 32 to 95% |

In an embodiment, the proportions of cement, water and the total of secondary cementitious material, sand, gravel, rock, rock flour, grit, pigments, glass fibers, steel fibers, polymer fibers, and/or polymers add up to at least 90%, at least 95%, at least 98% or at least 99% of the concrete or mortar mixture. In one embodiment, the concrete or mortar mixture consists of cement, water and secondary cementitious material, sand, gravel, rock, rock flour, grit, pigments, glass fibers, steel fibers, polymer fibers, and/or polymers.

In embodiments, a volume ratio of the first vessel to the second vessel may be from 1.0 : 1.0 to 1.0 : 10. In embodiments, this volume ratio is from 3.0 : 1.0 to 1.0 : 2.0 or from 2.5 : 1.0 to 1.0 : 1.5 or from 2.0 : 1.0 to 1.0 : 1.0. For example, the volume ratio may be about 1.0 : 1.0 or about 1.0 : 1.25 or about 1.0 : 1.5 or about 1.0 : 1.75 or about 1.0 : 2.0 or about 1.0 : 2.5 or about 1.0 : 3.0 or about 1.0 : 4.0 or about 1.0 : 5.0 or about 1.0 : 7.0 or about 1.0 : 9.0 or about 1.0 : 10.

In embodiments, activating the slurry may comprise ultrasonic treatment, or heating the slurry. Using ultrasonic treatment for activation is very efficient and hence preferred, whereas heating the slurry for activation may also be used in some instances of this disclosure. Regarding a particularly low carbon footprint, ultrasonic treatment can be advantageous. Furthermore, when using ultrasonic treatment, the energy input is particularly well controllable and exactly quantifiable.

In embodiments, the process of this disclosure includes stirring the slurry and/or the activated slurry. Stirring may take place in the first vessel. In embodiments, stirring may be performed at a power input of at most 2.5 W/l, at most 1.5 W/l or at most 0.50 W/l relative to the volume of the slurry or activated slurry, respectively. Limiting the power input through stirring as indicated helps reduce energy consumption. In some embodiments, stirring is performed at a power input of at least 0.05 W/l, at least 0.10 W/l or at least 0.20 W/l. Optionally, stirring may include a power input into the slurry or activated slurry of from 0.05 to 2.5 W/l, from 0.10 to 1.5 W/l, or from 0.20 to 0.50 W/l. A minimum power input helps reduce sedimentation of the slurry or activated slurry. Optionally the power input parameters detailed above relate to stirring in the first and/or second vessels.

In embodiments, a ratio of a volume of the first vessel relative to the cement mass ratio may be at least 3.0 [m$^3$]. The ratio is calculated using the volume of the first vessel in m$^3$ and the cement mass ratio as a unitless value. The ratio may be at least 3.0, at least 6.0, at least 9.0, at least 11.0, at least 13.0 or at least 15.0. The ratio may be at most 80.0, at most 70.0, at most 60.0, at most 50.0 or at most 45.0. For example, the ratio may be from 3.0 to 80.0, from 6.0 to 70.0, from 9.0 to 60.0, from 11.0 to 50.0 or from 13.0 to 45.0. The inventors have found that it is beneficial for the effectiveness of the process to use a certain minimum size of the first vessel for activating the slurry in relation to the amount of activated slurry in the mixture to be prepared.

In embodiments, a ratio of a volume of the activated slurry in the first vessel to the cement mass ratio may be at least 2.5 [m$^3$]. The ratio is calculated using the volume of the activated slurry in the first vessel in m$^3$ and the cement mass ratio as a unitless value. The ratio may be at least 2.5, at least 5.5, at least 9.0, at least 10.0, at least 12.0 or at least 14.0. The ratio may be at most 40.0, at most 30.0, at most 25.0, at most 23.0 or at most 18.0. For example, the ratio may be from 2.5 to 40.0, from 5.5 to 30.0, from 9.0 to 25.0, from 10.0 to 23.0 or from 14.0 to 18.0. The inventors have further found that it is beneficial to use a certain minimum amount of activated slurry in the first vessel in relation to the amount of activated slurry in the mixture to be prepared.

In embodiments, a ratio of a daily production output of the process to a volume of the activated slurry may be at most 200 [d$^{-1}$]. The ratio is calculated using the daily production output in m$^3$/d and the volume of the activated slurry in m$^3$. The ratio may be at most 200 or at most 185 or at most 170 or at most 155 or at most 140. The ratio may be at least 25, at least 35, at least 50, at least 75 or at least 95. For example, the ratio may be from 25 to 200, from 35 to 185, from 50 to 170, from 75 to 155 or from 95 to 140. If multiple first vessels are used, the volume of activated slurry may refer to the sum of the volumes of first vessels.

In embodiments, the activated slurry, when preparing the mixture with the bulk components, may have a funnel flow time of 5 to 60 seconds as determined according to DIN EN 445:2008-01 at 25 °C and 1013 hPa with a 1 liter Marsh funnel. The funnel flow time may be at least 5 seconds or at least 7 seconds. The funnel flow time may be at most 60 seconds or at most 50 seconds or at most 40 seconds or at most 20 seconds. The funnel flow time may be 5 to 60 seconds or 5 to 50 seconds or 7 to 40 seconds or 7 to 20 seconds. It has been found that the process is particularly effective when the composition of the slurry and its activation are such that the slurry has a viscosity within a certain range when being mixed with the bulk components.

The present disclosure also relates to a slurry for a concrete or mortar mixture, comprising an amount of cement and an amount of water.

Particularly when activated, the slurry has a degree of hydration $\alpha$ of at least 1.0%, such as at least 2.0% or at least 3.0%. Optionally, the degree of hydration $\alpha$ is at most 10%, at most 7.5% or at most 5.0%. For example, the degree of hydration $\alpha$ may range from 1.0 to 10%, from 2.0 to 7.5% or from 3.0 to 5.0%. The degree of hydration $\alpha$ can be used to indicate the status of activation of the slurry. The parameter is known to the skilled person. It can be determined by thermal analysis, i.e. heating the slurry from 400 to 500°C so that calcium hydroxide forms calcium oxide and water and the weight loss due to water evaporation can be used to calculate the proportion of calcium hydroxide in the specimen as follows:

$$Ca(OH)_2 = \left[ \frac{m_{400} - m_{500}}{m_{500}} \right] \times \frac{74}{18}$$

wherein $m_{400}$ is the mass of the specimen at 400°C and $m_{500}$ is the mass at 500°C after complete drying, i.e. no more weight change occurs. The degree of hydration $\alpha$ is calculated

$$degree\ of\ hydration\ \alpha = \frac{Ca(OH)_2}{0.25}$$

The activated slurry has a very significant activation state since the degree of hydration $\alpha$ is indicative of the activation. If the slurry has a significant activation state, the concrete or mortar mixture produced with it will solidify more quickly, allowing for swift demolding of structural components.

In a concrete or mortar mixture, the degree of activation can be measured in the same way as in the slurry.

In an embodiment, the slurry and/or the activated slurry has a density of at least 1.20 kg/dm³, at least 1.25 kg/dm³, at least 1.30 kg/dm³ or at least 1.33 kg/dm³. Optionally, this density may be up to 1.75 kg/dm³, up to 1.60 kg/dm³, up to 1.50 kg/dm³, up to 1.45 kg/dm³, or up to 1.40 kg/dm³. Optionally, the density of the slurry and/or activated slurry may range from 1.20 to 1.75 kg/dm³, from 1.25 to 1.60 kg/dm³, from 1.30 kg/dm³ to 1.50 kg/dm³, or from 1.33 to 1.40 kg/dm³.

The present disclosure further relates to a method of making a structural component comprising performing the method of making a concrete or mortar mixture according to present disclosure and solidifying the concrete or mortar mixture in the shape of the structural component. The structural components, such as walls, pillars, ceilings, or complete building blocks, for example for a bridge, will be of high and uniform quality as explained above.

A method of the present disclosure can be performed in a device for making a concrete or mortar mixture comprising

- a first vessel comprising an activation device for activating a slurry consisting of an amount of cement and an amount of water, optionally further comprising a stirrer;

- a second vessel for storing the activated slurry, optionally comprising a stirrer; and

- a mixing compartment or vessel for mixing (a) at least a portion of the activated slurry and (b) bulk components, wherein the bulk components comprise at least water and cement;

wherein a ratio of a volume of the first vessel to a volume of the second vessel is from 3.0 : 1.0 to 1.0:10.0, or to 1.0 : 2.0, or from 2.5 : 1.0 to 1.0 : 1.5 or from 2.0 : 1.0 to 1.0 : 1.0. In some embodiments, the second vessel can be large in the sense that they are larger than the first vessel. As the process according to this disclosure allows for sufficient activation in the first vessel, the second vessel is not needed for activation purposes. In some embodiments, activation does essentially not continue in the second vessel. Therefore, several portions of activated slurry may transferred from one or more first vessels and stored in the second vessel without mixing batches of activated slurry with varying activation stages.

For example, the first vessel may have a volume of at least 0.6 m³, at least 1.0 m³ or at least 1.4 m³. In embodiments, the first vessel has a volume of up to 10 m³, up to 8.0 m³, up to 5.0 m³ or up to 3.0 m³. Thus, the volume of the first vessel may range from 0.6 to 10 m³, from 1.0 to 8.0 m³, or from 1.4 to 5.0 m³.

Optionally, the single vessels may be connected by one or more pipes, e.g. a pipe system. This facilitates the transfer of the slurry and mixture from one vessel into the next and particularly supports automatic operation. However, the vessels may as well be designed as separate vessels and the transfer between them can be made by pouring their contents into the other vessel.

In alternative embodiments, more than one first vessel may be used, for example two, three, or four first vessels. In this case, each further first vessel will satisfy the ratio of a volume of the first vessel to a volume of the second vessel defined above.

In embodiments, the device for making a concrete or mortar mixture may further comprise a pre-mixing vessel for mixing an amount of cement and an amount of water to obtain a slurry. Mixing of the slurry may be done already within the first vessel before the activation is started. If this process step is to be performed separately, the device will accordingly be provided with an additional pre-mixing vessel. After mixing the slurry in the pre-mixing vessel, it can then be transferred to the first vessel for activation.

Optionally, the first vessel, the second vessel, the mixing vessel, and the pre-mixing vessel may be provided with an internal or external cooling device, such as a cooling pipe or a double wall cooling. Since the reactions of the concrete or mortar mixture are of an exothermic nature, a cooling device can help to control the reaction and ascertain constant conditions. This may improve the quality of the concrete or mortar mixture produced.

In embodiments, the activation device may comprise at least one ultrasonic probe and at least one ultrasonic oscillator, such as a piezoelectric element, which applies ultrasound to the at least one ultrasonic probe.

In embodiments, the at least one ultrasonic probe may be designed as a sonotrode and preferably operate, when determined at T = 25 °C and p = 1013.25 hPa, with an amplitude of the ultrasound emitted of 15 - 500 $\mu$m, with a frequency of the ultrasound emitted of 16 kHz - 30 kHz, in particular of 18 kHz - 22 kHz, and with an intensity of the ultrasound emitted of 25 - 250 W/cm$^2$. The aforementioned values can be determined electroacoustically in water, for example, using a hydrophone.

Specific embodiments

According to item 1, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

  wherein a cement mass ratio of cement in the slurry to cement in the bulk components is from 0.01 to 0.60, and

  wherein an activation time of the slurry is from 0.5 to 5 hours, and wherein the activation time in hours is from 2.0 to 400 times the cement mass ratio, such as from 40 to 160 times the cement mass ratio.

According to item 2, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

  wherein a cement mass ratio of cement in the slurry to cement in the bulk components is from 0.01 to 0.75, and

  wherein an activation time of the slurry is at least 0.1 hours , and wherein the activation time in hours is from 2.0 to 400 times the cement mass ratio.

According to item 3, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

wherein a cement mass ratio of cement in the slurry to cement in the bulk components is from 0.01 to 0.75, and wherein an activation time of the slurry is at least 0.1 hours , and wherein the activation time in hours is from 2.0 to 400 times the cement mass ratio, wherein
the slurry comprises in % by mass

| | |
|---|---|
| cement | 5.0 to 50% |
| water | 40 to 90% |
| secondary cementitious material, rock flour, pigments glass fibers, steel fibers, polymer fibers, and/or polymers | 0 to 50% |

and wherein the bulk components comprise in % by mass:

| | |
|---|---|
| cement | 10 to 50% |
| water | 3 to 30 % |
| secondary cementitious material, sand, gravel, rock, rock flour, grit, pigments, glass fibers, steel fibers, polymer fibers, and/or polymers | 50 to 85% |

According to item 4, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein an activation time of the slurry is at least 0.1 hours , and wherein the activation time in hours is from 2.0 to 400 times the cement mass ratio, wherein
the slurry comprises in % by mass

| | |
|---|---|
| cement | 5.0 to 50% |
| water | 40 to 90% |
| secondary cementitious material, rock flour, pigments glass fibers, steel fibers, polymer fibers, and/or polymers | 0 to 50% |

and wherein the bulk components comprise in % by mass:

| | |
|---|---|
| cement | 10 to 50% |
| water | 3 to 30 % |

(continued)

| secondary cementitious material, sand, gravel, rock, rock flour, grit, pigments, glass fibers, steel fibers, polymer fibers, and/or polymers | 50 to 85% |
|---|---|

According to item 5, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein an activation time of the slurry is 0.5 to 5 hours, and wherein the activation time in hours is from 2.0 to 400 times the cement mass ratio, wherein

the slurry comprises in % by mass

| cement | 5.0 to 50% |
|---|---|
| water | 40 to 90% |
| secondary cementitious material, rock flour, pigments glass fibers, steel fibers, polymer fibers, and/or polymers | 0 to 50% |

and wherein the bulk components comprise in % by mass:

| cement | 10 to 50% |
|---|---|
| water | 3 to 30 % |
| secondary cementitious material, sand, gravel, rock, rock flour, grit, pigments, glass fibers, steel fibers, polymer fibers, and/or polymers | 50 to 85% |

According to item 6, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein an activation time of the slurry is 0.5 to 5 hours, and wherein the activation time in hours is from 2.0 to 400 times the cement mass ratio, wherein
the slurry comprises in % by mass

| cement | 5.0 to 45% |
|---|---|
| water | 45 to 80% |

(continued)

| secondary cementitious material, rock flour, pigments glass fibers, steel fibers, polymer fibers, and/or polymers | 5.0 to 40% |
|---|---|

and wherein the bulk components comprise in % by mass:

| cement | 15 to 45% |
|---|---|
| water | 5 to 25% |
| secondary cementitious material, sand, gravel, rock, rock flour, grit, pigments, glass fibers, steel fibers, polymer fibers, and/or polymers | 50 to 82% |

According to item 7, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

wherein a cement mass ratio of cement in the slurry to cement in the bulk components is from 0.01 to 0.60, and

wherein a ratio of a volume of the first vessel relative to the cement mass ratio is from 9.0 to 60.0 [$m^3$].

According to item 8, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and

wherein a ratio of a volume of the first vessel relative to the cement mass ratio is from 9.0 to 60.0 [$m^3$].

According to item 9, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

wherein a cement mass ratio of cement in the slurry to cement in the bulk components is from 0.01 to 0.75, and wherein a ratio of a volume of the first vessel relative to the cement mass ratio is from 9.0 to 60.0 [$m^3$], wherein the slurry comprises in % by mass

| | |
|---|---|
| cement | 5.0 to 50% |
| water | 40 to 90% |
| secondary cementitious material, rock flour, pigments glass fibers, steel fibers, polymer fibers, and/or polymers | 0 to 50% |

and wherein the bulk components comprise in % by mass:

| | |
|---|---|
| cement | 10 to 50% |
| water | 3 to 30 % |
| secondary cementitious material, sand, gravel, rock, rock flour, grit, pigments, glass fibers, steel fibers, polymer fibers, and/or polymers | 50 to 85% |

**[0090]** According to item 10, this disclosure relates to a method of making a concrete or mortar mixture, the method comprising

- mixing an amount of cement and an amount of water to obtain a slurry,
- activating the slurry in a first vessel, wherein the activated slurry has a degree of hydration of from 1.0 to 10%,
- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein a ratio of a volume of the first vessel relative to the cement mass ratio is from 9.0 to 60.0 [$m^3$], wherein the slurry comprises in % by mass

| | |
|---|---|
| cement | 5.0 to 50% |
| water | 40 to 90% |
| secondary cementitious material, rock flour, pigments glass fibers, steel fibers, polymer fibers, and/or polymers | 0 to 50% |

and wherein the bulk components comprise in % by mass:

| | |
|---|---|
| cement | 10 to 50% |
| water | 3 to 30 % |
| secondary cementitious material, sand, gravel, rock, rock flour, grit, pigments, glass fibers, steel fibers, polymer fibers, and/or polymers | 50 to 85% |

**[0091]** According to item 11, this disclosure relates to a method of making a concrete or mortar mixture, the method comprising

- mixing an amount of cement and an amount of water to obtain a slurry,
- activating the slurry in a first vessel, wherein the activated slurry has a degree of hydration of from 1.0 to 10%,
- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein a ratio of a volume of the first vessel relative to the cement mass ratio is from 9.0 to 60.0 [m³], wherein the slurry comprises in % by mass

| cement | 5.0 to 50% |
|---|---|
| water | 40 to 90% |
| secondary cementitious material, rock flour, pigments glass fibers, steel fibers, polymer fibers, and/or polymers | 0 to 50% |

and wherein the bulk components comprise in % by mass:

| cement | 10 to 50% |
|---|---|
| water | 3 to 30 % |
| secondary cementitious material, sand, gravel, rock, rock flour, grit, pigments, glass fibers, steel fibers, polymer fibers, and/or polymers | 50 to 85% |

According to item 12, this disclosure relates to a method of making a concrete or mortar mixture, the method comprising

-   mixing an amount of cement and an amount of water to obtain a slurry,

-   activating the slurry in a first vessel, wherein the activated slurry has a degree of hydration of from 1.0 to 10%,

-   preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein a ratio of a volume of the first vessel relative to the cement mass ratio is from 9.0 to 60.0 [m³], wherein the slurry comprises in % by mass

| cement | 5.0 to 45% |
|---|---|
| water | 45 to 80% |
| secondary cementitious material, rock flour, pigments glass fibers, steel fibers, polymer fibers, and/or polymers | 5.0 to 40% |

and wherein the bulk components comprise in % by mass:

| cement | 15 to 45% |
|---|---|
| water | 5 to 25% |
| secondary cementitious material, sand, gravel, rock, rock flour, grit, pigments, glass fibers, steel fibers, polymer fibers, and/or polymers | 50 to 82% |

According to item 13, this disclosure relates to a method of making a concrete or mortar mixture, the method comprising

-   mixing an amount of cement and an amount of water to obtain a slurry,

-   activating the slurry in a first vessel,

- preparing a mixture of (a) at least a portion of the activated slurry and (b) bulk components, wherein the bulk components comprise at least water and cement,

wherein a cement mass ratio of cement in the slurry to cement in the bulk components is from 0.01 to 0.60, and

wherein a ratio of a daily production output of the process to a volume of the activated slurry is from 50 to 170 [d$^{-1}$].

According to item 14, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and

wherein a ratio of a daily production output of the process to a volume of the activated slurry is from 50 to 170 [d$^{-1}$].

According to item 15, this disclosure relates to a method of making a concrete or mortar mixture, the method comprising

- mixing an amount of cement and an amount of water to obtain a slurry,

- activating the slurry in a first vessel,

- preparing a mixture of (a) at least a portion of the activated slurry and (b) bulk components, wherein the bulk components comprise at least water and cement,

wherein a cement mass ratio of cement in the slurry to cement in the bulk components is from 0.01 to 0.75, and wherein an activation time of the slurry is at least 0.1 hours , and wherein the activation time in hours is from 2.0 to 400 times the cement mass ratio, wherein
the slurry comprises in % by mass

| cement | 5.0 to 50% |
| water | 40 to 90% |
| secondary cementitious material, rock flour, pigments glass fibers, steel fibers, polymer fibers, and/or polymers | 0 to 50% |

and wherein the bulk components comprise in % by mass:

| cement | 10 to 50% |
| water | 3 to 30 % |
| secondary cementitious material, sand, gravel, rock, rock flour, grit, pigments, glass fibers, steel fibers, polymer fibers, and/or polymers | 50 to 85% |

According to item 16, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein a ratio of a daily production output of the process to a volume of the activated slurry is from 50 to 170 $[d^{-1}]$, wherein the slurry comprises in % by mass

| cement | 5.0 to 50% |
|---|---|
| water | 40 to 90% |
| secondary cementitious material, rock flour, pigments glass fibers, steel fibers, polymer fibers, and/or polymers | 0 to 50% |

and wherein the bulk components comprise in % by mass:

| cement | 10 to 50% |
|---|---|
| water | 3 to 30 % |
| secondary cementitious material, sand, gravel, rock, rock flour, grit, pigments, glass fibers, steel fibers, polymer fibers, and/or polymers | 50 to 85% |

According to item 17, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein a ratio of a daily production output of the process to a volume of the activated slurry is from 50 to 170 $[d^{-1}]$, wherein the slurry comprises in % by mass

| cement | 5.0 to 50% |
|---|---|
| water | 40 to 90% |
| secondary cementitious material, rock flour, pigments glass fibers, steel fibers, polymer fibers, and/or polymers | 0 to 50% |

and wherein the bulk components comprise in % by mass:

| cement | 10 to 50% |
|---|---|
| water | 3 to 30 % |
| secondary cementitious material, sand, gravel, rock, rock flour, grit, pigments, glass fibers, steel fibers, polymer fibers, and/or polymers | 50 to 85% |

According to item 18, this disclosure relates to a method of making a concrete or mortar mixture, the method comprising

- mixing an amount of cement and an amount of water to obtain a slurry,

- activating the slurry in a first vessel, wherein the activated slurry has a degree of hydration of from 1.0 to 10%,

- preparing a mixture of (a) at least a portion of the activated slurry and (b) bulk components, wherein the bulk components comprise at least water and cement, wherein the mixture has a degree of hydration of from >0.3% to 4.0% immediately after mixing,

wherein a cement mass ratio of cement in the slurry to cement in the bulk components is from 0.01 to 0.75, and wherein a ratio of a daily production output of the process to a volume of the activated slurry is from 50 to 170 [d$^{-1}$], wherein the slurry comprises in % by mass

| cement | 5.0 to 45% |
|---|---|
| water | 45 to 80% |
| secondary cementitious material, rock flour, pigments glass fibers, steel fibers, polymer fibers, and/or polymers | 5.0 to 40% |

and wherein the bulk components comprise in % by mass:

| cement | 15 to 45% |
|---|---|
| water | 5 to 25% |
| secondary cementitious material, sand, gravel, rock, rock flour, grit, pigments, glass fibers, steel fibers, polymer fibers, and/or polymers | 50 to 82% |

According to item 19, the methods according to any one of items 1 to 18 may include the following steps in consecutive order:

a) mixing an amount of cement and an amount of water to obtain a slurry,

b) activating the slurry in the first vessel,

c) transferring activated slurry from the first vessel to a second vessel and storing the activated slurry in the second vessel, optionally under light stirring and/or cooling to avoid further activation,

d) during storing of the activated slurry in the second vessel, activating a further portion of slurry in the first vessel,

e) discharging stored activated slurry from the second vessel, and

f) transferring the further activated slurry from the first vessel to the second vessel and storing the further activated slurry in the second vessel.

Detailed description of the drawings

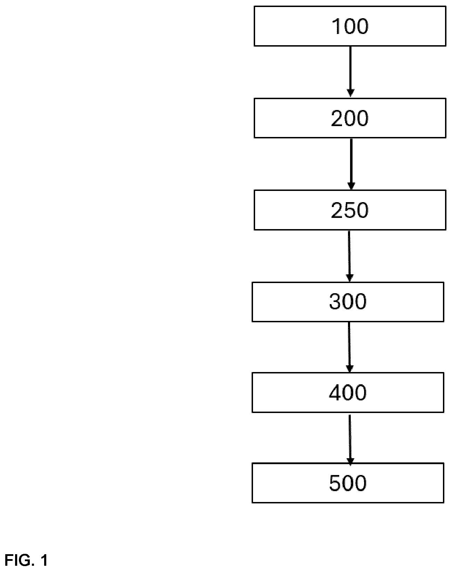

Figure 1 is a flowchart of a method of making a concrete or mortar mixture according to this disclosure, comprising mixing 100 an amount of cement and an amount of water to obtain a slurry. Mixing an amount of cement and an amount of water allows for choosing optimal amounts of ratios of these two crucial components for concrete and mortar. Further, the process includes activating 200 the slurry in a first vessel. Activation of the slurry reduces solidification times by starting the hydration process in the slurry. Activation can be performed using ultrasonic treatment and/or heat treatment. The slurry and/or activated slurry may be stirred in the first vessel. Optionally, the method comprises storing 250 the activated slurry in a second vessel, in particular before preparing the mixture. The activated slurry may be stirred gently in this second vessel so as to prevent the slurry from caking at the bottom of the vessel. Further, the method includes preparing 300 a mixture of at least a portion of the activated slurry and bulk components, wherein the bulk components comprise at least water and

20

cement. Typically, the bulk components will contain further components such as one or more of secondary cementitious material, sand, gravel, rock flour, grit, pigments, glass fibers, steel fibers, polymer fibers, and/or polymers. The method further comprises obtaining 400 the concrete or mortar mixture, the concrete or mortar mixture comprising or consisting of the activated slurry and the bulk components. The method may further comprise solidifying 500 the concrete or mortar mixture in the shape of the structural component.

Example 1

A device for making concrete mixtures is set to a throughput of 10 m$^3$ of concrete mixture per hour at a proportion of cement in the concrete mixture of 350 kg/m$^3$. The device comprises one first vessel of 1.5 m$^3$. The cement mass ratio was 0.029 and the activation time was set to 2 hours, which is 69 times the cement mass ratio. The volume of the first vessel relative to the cement mass ratio was 52 m$^3$.

The compositions of slurry, bulk components and cement mixture were as follows:

|  | Slurry | Bulk Components | Concrete Mixture (1,0 m$^3$) |
|---|---|---|---|
| Water | 50 kg | 120 kg | 170 kg |
| Cement | 10 kg | 340 kg | 350 kg |
| Additives | 40 kg | 10 kg | 50 kg |
| Aggregates | 0 kg | 1800 kg | 1800 kg |

The activation time of the cement slurry was determined to be 2 hours. A total of 100 kg of slurry is necessary to produce a m$^3$ of concrete with the desired properties. To get a device output for 10 m$^3$ of concrete production per hour, 1000 kg of slurry must be ready per hour. With 2 hours of activation time, this requires the activation of a 2000 kg batch or for a density of 1.35 kg/dm$^3$ a required volume of 1.48 m$^3$. The volume of activated slurry to cement mass ratio was 1.48 m3 / 0.029 = 51 m$^3$.

Example 2

A customer wants to decrease the amount of cement in concrete and replace the cement with supplementary cementitious materials. The concrete composition was chosen to be (values in kg):

| Cement | Water | Additive | Admixture | Sand | Gravel |
|---|---|---|---|---|---|
| 350 | 170 | 50 | 3 | 700 | 1100 |

The goal was to achieve a compressive strength of at least 15 MPa after 16 hours to demold the concrete and prepare them for further processing. In table 1 a compressive strength development of a reference concrete (state of the art) and a concrete in accordance to the invention is given.

| Concrete age | Example Compressive strength | Comparative* Compressive strength |
|---|---|---|
| 14h | 13.8 MPa | 4.4 MPa |
| 16 h | 15.5 MPa | 8.2 MPa |
| 24 h | 21.6 MPa | 17.8 MPa |
| *after mixing the components of the final composition without activated slurry | | |

The results indicate that the concrete mixture prepared according to this disclosure provides for a steeper increase in compressive strength within the early hours of aging. Therefore, structural components may be stripped, or demolded, earlier compared to conventional structural components.

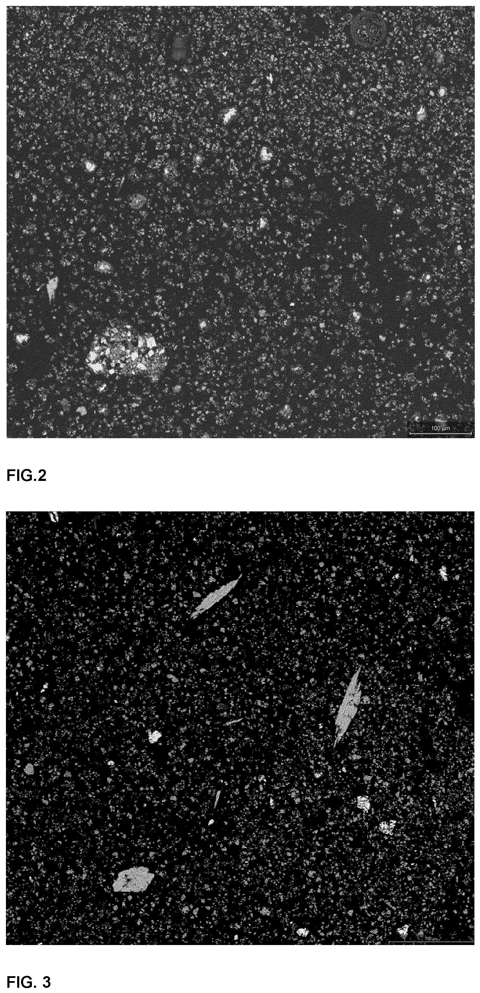

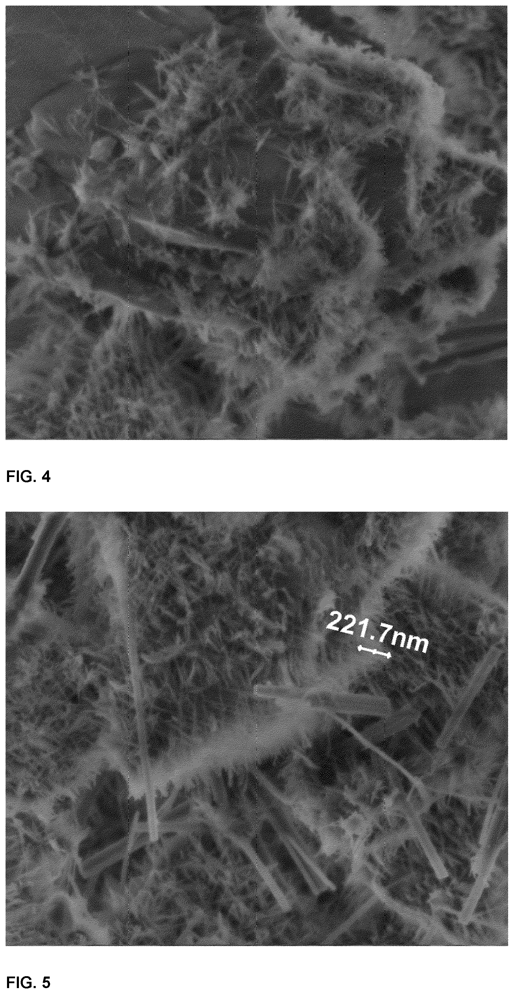

Figures 2 and 3 show an activated and a non-activated slurry, respectively, after 24 hours of storage. The non-activated slurry is less homogenous than the activated slurry. As is apparent from a comparison of Figures 4 and 5, the activated slurry of Figure 5 has larger crystal phases compared to the non-activated slurry of Figure 4.

**Claims**

1.  Method of making a concrete or mortar mixture, the method comprising

    - mixing an amount of cement and an amount of water to obtain a slurry,
    - activating the slurry in a first vessel,
    - preparing a mixture of (a) at least a portion of the activated slurry and (b) bulk components, wherein the bulk components comprise at least water and cement,
    wherein a cement mass ratio of cement in the slurry to cement in the bulk components is from 0.01 to 0.75, and wherein an activation time of the slurry is at least 0.1 h, and wherein the activation time in hours is from 2.0 to 400 times the cement mass ratio.

2.  The method of claim 1, further comprising

    - storing the activated slurry in a second vessel, in particular before preparing the mixture.

3.  The method of claim 1 or 2, further comprising

    - obtaining the concrete or mortar mixture, the concrete or mortar mixture comprising or consisting of the activated slurry and the bulk components.

4.  The method of one or more of the preceding claims, wherein the slurry comprises

    - from 10 to 50 % by mass of cement, and
    - from 40 to 90 % by mass of water.

5.  The method of one or more of the preceding claims, wherein the bulk components comprise

    - from 10 to 50 % by mass of cement,
    - from 20 to 70 % by mass of water, and
    - optionally from 50 to 85 % by mass of secondary cementitious material, sand, gravel, rock, rock flour, grit, pigments, glass fibers, steel fibers, polymer fibers, and/or polymers.

6.  The method of one or more of the preceding claims, wherein the concrete or mortar mixture comprises

    - from 10 to 50 % by mass of cement,
    - from 4 to 12 % by mass of water, and
    - optionally from 50 to 85 % by mass of secondary cementitious material, sand, gravel, rock, rock flour, grit, pigments, glass fibers, steel fibers, polymer fibers, and/or polymers.

7.  The method of one or more of claims 2 to 6, wherein a volume ratio of the first vessel to the second vessel is from 3.0 : 1.0 to 1.0 : 10.

8.  The method of one or more of the preceding claims, wherein activating the slurry comprises ultrasonic treatment and/or heating.

9.  The method of one or more of the preceding claims, wherein a ratio of a volume of the first vessel relative to the cement mass ratio is at least 3.0 $[m^3]$.

10. The method of one or more of the preceding claims, wherein a ratio of a volume of the activated slurry in the first vessel to the cement mass ratio is at least 2.5 $[m^3]$.

11. The method of one or more of the preceding claims, wherein a ratio of a daily production output of the process to a volume of the activated slurry is at most 200 $[d^{-1}]$.

12. The method of one or more of the preceding claims, wherein the activated slurry, when preparing the mixture with the bulk components, has a funnel flow time of 5 to 60 seconds as determined according to DIN EN 445:2008-01 at 25 °C and 1013 hPa with a 1 liter Marsh funnel.

**13.** A slurry for a concrete or mortar mixture, comprising an amount of cement and an amount of water wherein, when activated, the slurry has a degree of hydration of from 1.0 to 10%.

**14.** Method of making a structural component comprising,

- performing the method of making a concrete or mortar mixture according to one or more of claims 1 to 12, and
- solidifying the concrete or mortar mixture in the shape of the structural component.

**15.** Structural component obtainable or obtained according to the method of claim 14.

```
┌─────────────────┐
│       100       │
└─────────────────┘
         │
         ▼
┌─────────────────┐
│       200       │
└─────────────────┘
         │
         ▼
┌─────────────────┐
│       250       │
└─────────────────┘
         │
         ▼
┌─────────────────┐
│       300       │
└─────────────────┘
         │
         ▼
┌─────────────────┐
│       400       │
└─────────────────┘
         │
         ▼
┌─────────────────┐
│       500       │
└─────────────────┘
```

FIG. 1

FIG.2

FIG. 3

FIG. 4

FIG. 5

**EUROPEAN SEARCH REPORT**

Application Number

EP 24 22 2229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 132015 A1 (SONOCRETE GMBH [DE]) 2 June 2022 (2022-06-02) | 1-3,6-13 | INV. C04B28/02 |
| Y | * claims 1,7,13,17-20 * | 14,15 | |
| A | * table 3 * <br> * example * | 4,5 | |
| Y | CN 118 765 268 A (ARELIC INC) 11 October 2024 (2024-10-11) * claims 1,24 * * paragraphs [0243], [0320] * | 14,15 | |

TECHNICAL FIELDS SEARCHED (IPC)

C04B

The present search report has been drawn up for all claims

| Place of search | Date of completion of the search | Examiner |
|---|---|---|
| The Hague | 3 June 2025 | Zammit, Madalena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2229

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| DE 102020132015 A1 | 02-06-2022 | NONE | | |
| CN 118765268 A | 11-10-2024 | CN | 118765268 A | 11-10-2024 |
| | | EP | 4452887 A1 | 30-10-2024 |
| | | US | 11673832 B1 | 13-06-2023 |
| | | US | 2023286859 A1 | 14-09-2023 |
| | | US | 2023339809 A1 | 26-10-2023 |
| | | WO | 2023122205 A1 | 29-06-2023 |

EPO FORM P0459

For more details about this annex : see Official Journal of the European Patent Office, No. 12/82